# EUROPEAN PATENT APPLICATION

(11) **EP 0 966 154 A1**
(43) Date of publication of application: **22.12.1999**
(21) Application number: 99110699.8
(22) Date of filing: 02.06.1999
(51) Int. Cl.: H04N 5/232

(54) **Method and equipment for remote control on three axes of a telecamera or cinecamera**

(30) Priority: 16.06.1998 IT MI981373
(71) Applicant: Movie Engineering srl, 20162 Milano (IT)
(72) Inventor: Basilico, Vera, 20020 Solaro (MI) (IT)
(74) Representative: Petruzziello, Aldo

(57) **Abstract**

A method and equipment for remote control of a telecamera or cinecamera (4) mounted on a motorized actuator head (3) with the possibility of movements on three axes at right angles to each other (X', Y', Z'), of pan, tilt and roll respectively, using an acquirer head (1) without a telecamera or cinecamera and possibly provided with a television monitor (13), said acquirer head (1) being provided with three fluid axes (X, Y, Z), of pan, tilt and roll respectively, such that the movements imparted to said fluid axes (X, Y, Z) by the operator are transferred proportionally to the corresponding axes (X', Y', Z') around which the telecamera or cinecamera (4) rotates.

## Description

The present invention relates to a method and equipment for remote control on three axes of a telecamera or cinecamera.

Henceforth reference will be made mainly to a telecamera, it being understood that what is said applies equally to a cinecamera.

During the shooting of videos or films for television, the operator needs to make movements with the camera to follow the subject.

These movements are generally called pan (horizontal) and tilt (vertical).

Lately there has been an increase in shots in which use is made of a third movement called roll (rotation) which consists in a rotational movement around the optical axis of the shot.

It is not usually a movement that serves to follow the subject but which makes the shot more dynamic.

For this reason, in direct shooting of the subject, telecamera mounts have also developed, in that they previously had movements on two axes (pan and tilt) and now they increasingly often have a third axis (roll).

Normally, the addition of the third axis to a fluid or gyroscopic head for telecamera is achieved by adding an accessory placed between the telecamera and the normal pan and tilt head. If this device allows rotation of the telecamera on its optical axis, it is referred to as roll; if, on the other hand, the axis of rotation is different from the optical axis of the telecamera, because it is situated below the camera for example, it is referred to as Dutch.

In parallel to the fluid heads that are moved directly by the camera operator, the remotely controlled motorized mounts, normally called remote or actuator heads, have also been adapted to the new requirement for movement on three axes. In the majority of cases a motorized mechanism that allows just this roll movement has been added, in other cases, the remote heads have been redesigned to accommodate the increased size and weight created by the new movement.

The classical remote controls of a telecamera use a joystick, angular excursion of which determines a corresponding angular movement of the telecamera through a combination of pan and tilt movements, or a pair of hand wheels, rotation of which causes the telecamera to move around the respective pan and tilt axes.

For remote control on three axes, in the case of use of a joystick, manufacturers have added the roll command through rotation of the joystick lever. Joysticks with three axes are commonly used in the industrial field.

In the case of hand wheel controls, on the other hand, a third hand wheel has been added to give the roll movement.

The same applicant has devised a remote control system for a telecamera or cinecamera using a normal fluid or gyroscopic head, of the type commonly used for direct shooting, from which the camera has been removed.

Such a remote control system as regards the pan and tilt axes is described in detail in European patent No. 469.030.

The arrangement described in said European patent has proved extremely satisfactory, in that it puts the operator in exactly the same condition as when he is doing direct filming.

The object of the invention is to improve such a control through a fluid head, adapting it to three axes, and still maintaining the same operating conditions that apply in the case of direct handling of a telecamera.

This object is achieved with the characteristics listed in the appended independent claims.

Preferred embodiments of the invention are apparent from the dependent claims.

Basically, according to the invention, a third fluid axis to control the roll movement of the telecamera is mounted on the fluid head that remotely controls the telecamera according to the aforesaid European patent.

According to an embodiment of the invention, the fluid axis of control of the roll movement is placed above the fluid axis of control of the tilt movement, which in turn is placed above the fluid assembly of control of the pan movement.

According to a further embodiment of the invention, the fluid axis of control of the roll movement is interposed between the fluid assembly of control the pan movement and the fluid axis of tilt, respectively.

In both said cases the fluid axis of control of the roll movement is advantageously operated by means of a separate lever from that or those operating the fluid axes of pan and tilt.

According to a preferred embodiment of the invention, the fluid axis of control of the roll movements, instead of being disposed in alignment with the fluid head, is shifted laterally with respect thereto, in order to reduce the height of the head.

The latter solution is advantageous in that if a monitor is mounted on the head to allow the filming carried out by the telecamera to be followed remotely, said monitor can be mounted so as not to follow the roll or Dutch movements, thus giving the operator a more realistic impression of the shot, in that the image in the monitor actually follows the roll movement given to the remote telecamera.

Further characteristics of the invention will be made clearer by the detailed description that follows, referring to purely exemplary and therefore non-limiting embodiments thereof illustrated in the appended drawings, in which:
Figure 1 is a diagrammatic overall view of the equipment according to the invention, in a first embodiment thereof showing the fluid or acquirer head, the remote or actuator head and a central control unit;
Figure 2 is an axonometric view, on a larger scale, of the acquirer head only of the embodiment in Figure 1, shown from a different angle with respect to Figure 1;
Figure 3 is a diagrammatic view of the acquirer head alone according to a second embodiment of the invention;
Figure 4 is a diagrammatic view of the acquirer head alone according to a third embodiment of the invention;
Figure 5 is a partial enlarged axonometric view of the acquirer head of the embodiment in Figure 4, shown from a different angle with respect to that in Figure 4.

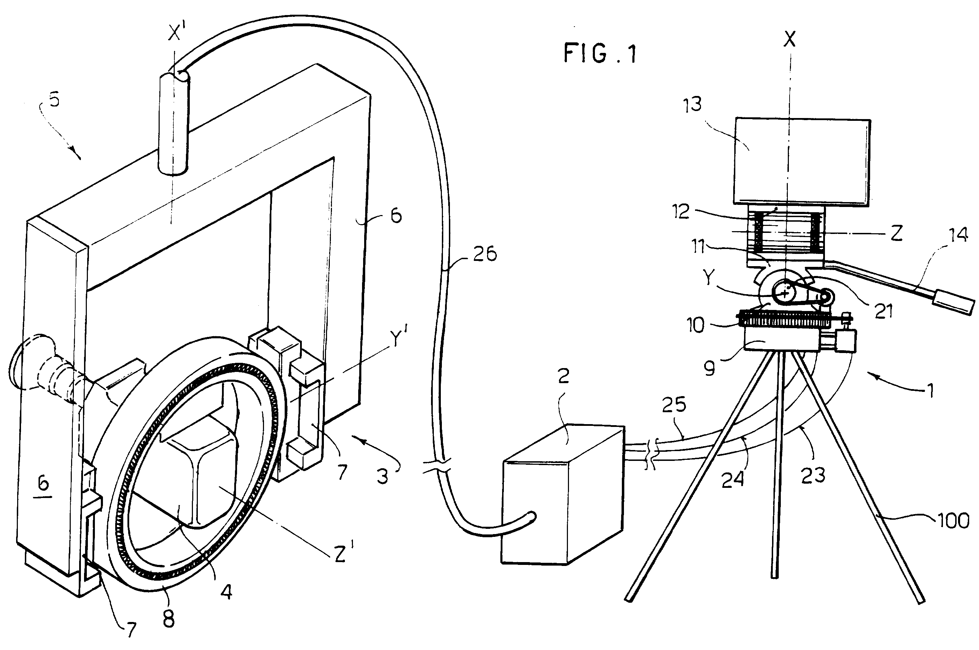

With reference initially to Figure 1, the numeral 1 denotes an acquirer head, from which the remote commands are imparted to a telecamera or cinecamera 4 mounted on a motorized actuator head, denoted by reference numeral 3, and the numeral 2 denotes a central control unit that establishes an electrical connection between the two heads and contains the drives of the motors.

The remote or actuator head 3, upon which the telecamera 4 is mounted (henceforth reference will be made prevalently to a telecamera although what is said is also applicable to a cinecamera), comprises a U-shaped bracket 5, mounted rotatably around a vertical axis X', that allows the pan movement of the telecamera 4.

Inside the two vertical arms 6 of the bracket 5, respective plates 7 are provided, supporting a ring 8, inside which the telecamera 4 is mounted.

The two plates 7 can rotate around an axis Y', that allows the tilt movement of the telecamera 4, which is mounted inside the ring 8 in such a way as to able to rotate around the axis Z' of the ring 8, coinciding with the optical axis of the telecamera, so as to obtain the roll movement.

In Figure 1 the motorizations that allow the three movements, pan, tilt and roll, are shown.

The acquirer head 1 is mounted on a tripod 100 and has a supporting base 9, fixed with respect to the tripod 100, a part 10 rotating around a vertical axis indicated with the letter X, a part 11 rotating around a horizontal axis, indicated with the letter Y and a part 12 rotating around a horizontal axis Z, at right angles to the axis Y.

A television monitor, indicated diagrammatically with reference numeral 13 and shown in Figure 1, can be fixed to the top part 12.

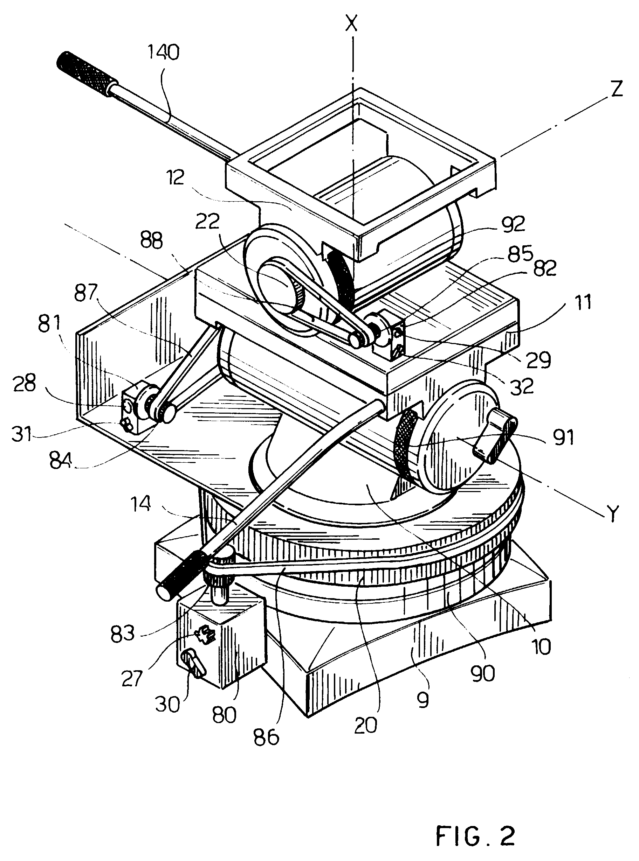

The rotations of the acquirer head 1 around the axes of pan X and the tilt Y are imparted by the operator by means of one or two levers 14 (in Figures 1 and 2 only one lever is shown) fixed to the part 11 of the head 1 rotating around the axis Y, while the rotations around the roll axis Z are imparted by means of an additional lever 140, disposed transversally to the lever 14 and fixed to the top part 12 of the head 1, rotating around the axis Z.

Moving the lever 14 horizontally causes rotation of the entire movable block of the head 1 around the pan axis X, whereas moving the lever 14 vertically causes rotation of the movable part 11, as well as the movable part 12 situated above it, together with the monitor 13 when present, around the tilt axis Y. Moving the lever 140 vertically, on the other hand, causes rotation of the movable part 12 and the monitor 13 fixed thereto, when present, around the roll axis Z. Obviously the pan movement can also be obtained by operating the lever 140, instead of the lever 14, although this is less convenient.

The fluidity of the pan, tilt and roll movements can be suitably regulated by acting on respective clutch plates 90, 91, 92 (see in particular Figure 2).

The pan, tilt and roll (or Dutch) movements are detected by special sensors 80, 81, 82 integral, respectively, with the fixed support 9 and the movable parts 10 and 11 of the head, rotating respectively around the axes of pan X and the tilt Y. In particular, pinions 83, 84 and 85 protrude from the sensors 80, 81 and 82 and are brought into rotation during the pan, tilt and roll movements, respectively, by respective cogged belts 86, 87 and 88, winding around corresponding sprocket wheels 20, 21, 22 integral, respectively, with the movable parts 10, 11 and 12 of the acquirer head.

At each angular rotation of the pinions 83, 84, 85, the corresponding sensors 80, 81, 82 send signals in the form of electrical pulses to the central control unit 2 shown diagrammatically in Figure 1, by means of respective electrical cables 23, 24, 25. The sensors 80, 81, 82 are preferably two-directional incremental encoders and the signals sent therefrom are square waves offset from one another by 90°.

It is obvious, however, that the sensors 80, 81, 82 can be of any other type suited to the purpose. On the basis of the signals received from the sensors of the acquirer head 1, the control unit 2 provides input to the motors provided in the actuator head 3 (not shown) to reproduce the pan, tilt and roll movements around the axes X', Y' and Z'. The electrical connection between the control unit 2 and the actuator head 3 is shown diagrammatically in Figure 1 by a cable 26.

There is a direct proportionality between the angular pan, tilt and roll movements of the acquirer head imparted by the operator, and the corresponding angular pan, tilt and roll movements of the motorized actuator head.

If this ratio of proportionality is 1:1 a certain angular excursion of the acquirer head 1 will correspond to the same angular excursion of the actuator head. The ratio of proportionality between the movements of the two heads can in any case be varied by means of special commutators 27, 28 and 29 which, according to the embodiment illustrated in the appended figures, are arranged respectively on sensors 80, 81, 82 of the pan, tilt and roll movements.

Respective inverters 30, 31, 32 are also provided on said sensors to invert the movements of rotation of the actuator head 3 with respect to those imparted to the acquirer head 1, if need be.

With the method and equipment for remote control of a telecamera or cinecamera on three axes according to the invention, it is apparent that the operator who acts on the levers 14, 140, finds himself working in the same condition as if he were handling the telecamera or cinecamera directly. In particular, providing the monitor 13 on the acquirer head 1, the operator will also be able to follow the image of the subject, recorded by the telecamera mounted on the actuator head, and therefore he sees the image he would see in the telecamera if this were mounted directly on the acquirer head 1 in place of the monitor 13.

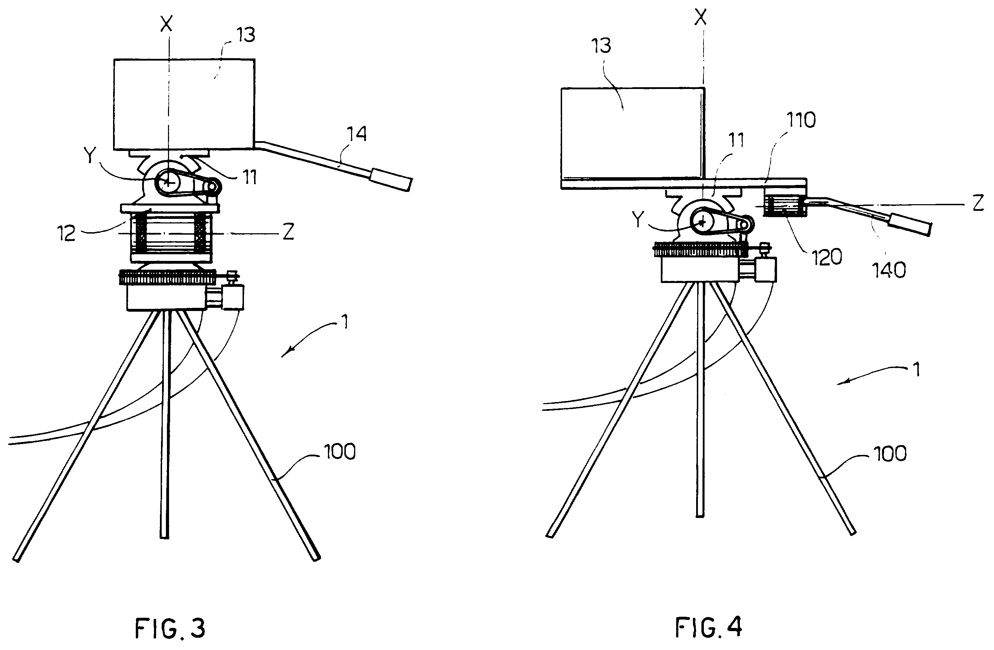

Figure 3 shows a variant embodiment of the acquirer head 1 according to the invention, which differs from that illustrated in Figures 1 and 2 in that the fluid axis of roll Z is situated below the fluid axis of tilt Y, and the position of the rotating parts 11 and 12 has therefore been inverted.

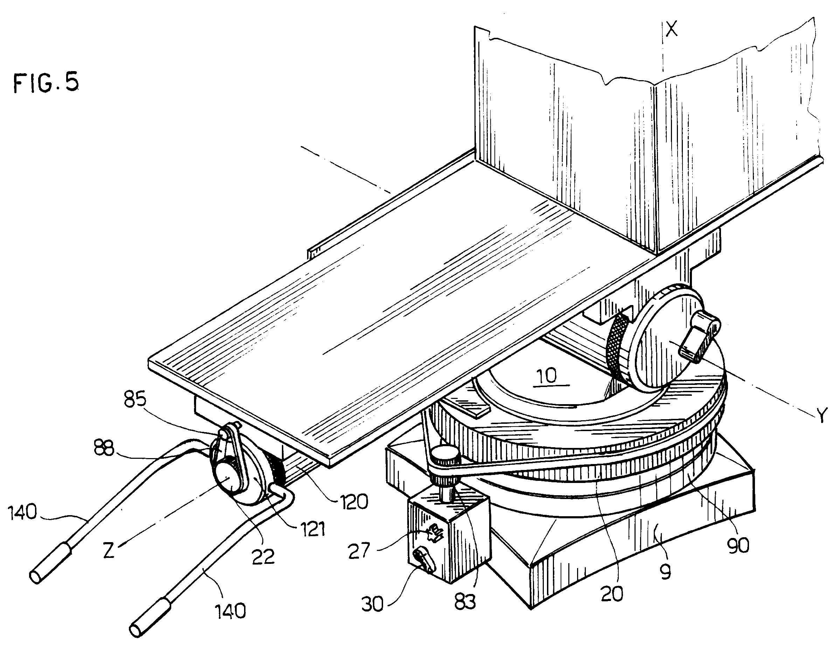

Figures 4 and 5 illustrate a further embodiment of the acquirer head 1 according to the invention, which differs from the embodiment in Figures 1 and 2 in that the assembly relating to the roll movement has been moved sideward with respect to the axis of pan X, taking the axis of roll Z roughly onto the same plane as the axis of tilt Y.

In this embodiment the roll fluid assembly, denoted by reference numeral 120, can have smaller dimensions than in the preceding embodiments, as shown in Figures 4 and 5, since it does not have to bear a load directly.

The assembly 120 is in fact constrained at the bottom to a plate 110, integral with the moveable part 11 rotating around the axis of tilt Y.

The monitor 13 can be mounted on said plate 110, in a position opposite the assembly 120, so as to be balanced thereby.

According to this embodiment two handles 140 are provided, connected to a rotating part 121 of the assembly 120, by means of which all the movements can be imparted: pan, tilt and roll.

The embodiment in Figures 4 and 5 is preferred both on account of the more ergonomic position of the monitor 13 and on account of the more realistic picture that can be viewed therein. In fact, when the telecamera 4 mounted on the actuator head 3 is controlled in roll, the rotation of the frame can be followed on the monitor 13 something which is not possible in the case in which the telecamera follows the roll movement. In this case, in fact, the picture would appear fixed on the screen.

Technically speaking, to have the picture on the monitor 13 rotating in the same direction as operation of the handles 140, for example clockwise, it is necessary to invert the roll movement of the telecamera 4, that is it is necessary for the camera to rotate anti-clockwise. However, this lies outside or in any case is not relevant to the inventive idea of the invention.

It is also obvious that in the various embodiments illustrated the monitor 13 can be mounted so that it follows only the pan movement of the acquirer head 1, and not the tilt movement, making it integral with the part 10 of the head 1 by means of a arm for connection thereto.

It would also be possible to mount the monitor in a completely fixed position, so that it does not follow any movement of the head 1. This embodiment has the drawback that in the case of wide panning shots the operator has difficulty in following the picture displayed on the monitor.

The invention described fully achieves the established aims, providing a remote control on three axes for a telecamera or cinecamera, that can be operated by the operator in the normal conditions of work on a fluid head for direct shooting.

## Claims

1. A method for remote control of a telecamera or cinecamera (4) mounted on a motorized actuator head (3), using for said remote control an acquirer head of the fluid or gyroscopic type, not equipped with a telecamera or cinecamera, characterized in that said control takes place on three axes, with a direct proportion between the movements imparted by the operator on three fluid axes (X, Y, Z), of pan, tilt and roll respectively, of the acquirer head and the corresponding movements around three axes (X', Y', Z'), of pan, tilt and roll respectively, of the telecamera or cinecamera (4).

2. A method according to claim 1, characterized in that the fluid axis (Z) of roll on the acquirer head (1) is above the fluid axis (Y) of tilt.

3. A method according to claim 1, characterized in that the fluid axis of roll (Z) on the acquirer head (1) is below the fluid axis of tilt (Y).

4. A method according to claim 1, characterized in that the fluid axis of roll (Z) on the acquirer head (1) is shifted sideward with respect to the fluid axis of pan (X), corresponding substantially to the vertical axis of the acquirer head (1).

5. A method according to any one of the preceding claims, characterized in that a television monitor (13) reproducing the picture recorded by the telecamera or cinecamera (4) is provided on the acquirer head (1).

6. A method according to claim 5, characterized in that said monitor (13) is mounted on the acquirer head (1) in such a way as to follow only the pan movements imparted to said head by the operator.

7. A method according to claim 5, characterized in that said monitor (13) is mounted on the acquirer head (1) in such a way as to follow the pan and tilt movements imparted by the operator.

8. A method according to claim 5, characterized in that said monitor (13) is mounted on the acquirer head (1) in such a way as to follow the pan, tilt and roll movements imparted by the operator.

9. Equipment for remote control of a telecamera or cinecamera (4) mounted on a motorized actuator head (3), by means of an acquirer head (1) of the fluid or gyroscopic type, not provided with a telecamera or cinecamera, characterized in that said equipment allows control on three axes, with a direct proportion between the movements imparted by the operator on three fluid axes (X, Y, Z), of pan, tilt and roll respectively, of the acquirer head, and the corresponding movements around three axes (X', Y', Z'), of pan, tilt and roll respectively, of the telecamera or cinecamera (4).

10. Equipment according to claim 9, characterized in that said fluid axis of roll (7) on the acquirer head (1) is situated above the fluid axis of tilt (Y), or below the fluid axis of tilt (Y), or is shifted sideward with respect to the fluid axis of pan (X), substantially corresponding to the vertical axis of the acquirer head (1).

11. Equipment according to claim 10, characterized in that a television monitor (13) reproducing the image shot by the telecamera or cinecamera (20) is provided on said acquirer head (1).

12. Equipment according to claim 11, characterized in that said monitor (13) is mounted on the acquirer head (1) in such a way as to follow the pan and/or tilt and/or roll movements imparted to said head by the operator.
